Europäisches Patentamt

European Patent Office

Office européen des brevets

(11) Publication number: **0 169 628**
**B1**

(12) EUROPEAN PATENT SPECIFICATION

(45) Date of publication of patent specification: 25.10.89

(51) Int. Cl.⁴: **C 09 D 5/18,** C 09 D 7/00, C 09 K 21/00

(21) Application number: 85301945.3

(22) Date of filing: 20.03.85

(54) Sprayable fireproof coatings.

(30) Priority: 22.03.84 US 592126
28.01.85 US 695584

(43) Date of publication of application:
29.01.86 Bulletin 86/05

(45) Publication of the grant of the patent:
25.10.89 Bulletin 89/43

(84) Designated Contracting States:
AT BE CH DE FR GB IT LI NL SE

(56) References cited:
EP-A-0 115 955
AU-A- 43 431
DE-A-2 411 028
FR-A-2 442 808
US-A-3 793 272

(73) Proprietor: HERCULES INCORPORATED
Hercules Plaza
Wilmington Delaware 19894 (US)

(72) Inventor: Burdick, Charles Lee
1806 Arlene Drive
Wilmington Delaware 19808 (US)

(74) Representative: De Minvielle-Devaux, Ian
Benedict Peter et al
CARPMAELS & RANSFORD 43, Bloomsbury
Square
London WC1A 2RA (GB)

Courier Press, Leamington Spa, England.

## Description

This invention relates to novel compositions useful as sprayable fireproof coatings containing at least one hydroxypropylhydroxyethylcellulose.

The building and construction industry frequently apply fireproof coatings by means of spraying to the appropriate structural parts of buildings, especially the girders, structural columns, and metal decking of the buildings, to dissipate heat in the event of a fire.

Conventional sprayable fireproof coatings are mixtures of plaster of Paris or a hydraulic cement, such as Portland cement, certain amounts of mineral wool and vermiculite, together with a minor proportion of a thickener for rheology control and water retention. They may also contain perlite as a heat diffuser. The dry plaster or cement mixture is admixed briefly with water in specialized mixing equipment and applied to the surface of the appropriate structural parts of buildings by pressurized spray.

Plaster of Paris is natural gypsum, of which the chemical formula is $CaSO_4.2H_2O$, which is converted into the calcium sulphate hemi-hydrate by known processes. Commercially available plaster of Paris varies greatly in quality, purity and properties, depending on where it was mined and the process used for its manufacture.

A wide variety of hydraulic cements usable in this invention are known and are commercially available. Portland cement of all types is particularly useful. Other hydraulic cements, such as supersulphated slag cement, calcium aluminate cement, natural cement, pozzolana cement, and lime, may be used.

The physical characteristics of cured conventional sprayable fireproof coatings are effected by the rate of curing, and thus, by the rate of water removal therefrom during the curing operation. Any influence which affects these parameters by increasing the rate of water removal or by diminishing the water concentration in the sprayable fireproof coating at the onset of the curing reaction can cause a deterioration of the physical properties of the fireproof coating.

To overcome, or at least minimize, the above-mentioned water-loss problems, a small amount of a water-soluble polymer, such as, starch, hydroxyethylcellulose and methylhydroxypropylcellulose, has been added to the sprayable fireproof coating compositions as a water retention aid. Desirably, these polymers first create a high water uptake of the fireproof coating composition, and then prevent the loss or segregation of the water from the fireproof coating composition by increasing the viscosity of the aqueous phase of the fireproof coating composition, thus, maintaining the desired water concentration in the coating composition during curing. In addition these polymers are intended to impart a high air content to the sprayable fireproof coating so that it will pump easily and smoothly at lower pressures. However, the above-mentioned water-soluble polymers often fail to provide and retain the desired water concentration and air content in the sprayable fireproof coating and thus give a sprayable fireproof coating composition which is difficult to pump, has relatively poor spray characteristics, including spattering, and has inadequate cure strength. Another drawback of the sprayable fireproof coating compositions containing the above-mentioned thickeners is that they can be uneven in application due to sagging of the sprayable fireproof coating after application to the structural substrate.

This invention provides improved dry sprayable fireproof coating compositions, containing a plaster of Paris or a hydraulic cement; mineral wool; vermiculite; and from 0.05 parts to 1.0 part of a water-retaining thickener, said dry composition being capable, when mixed with from 190 parts to 210 parts of its own weight of water, of producing a fireproof coating composition which can be sprayed in thin layers on the surfaces of structural substrates, characterized by using as the water-retaining thickener at least one hydroxypropylhydroxyethylcellulose having hydroxyethyl M.S. from 0.3 to 4.0 and hydroxypropyl M.S. greater than 0.35. When the dry sprayable fireproof coating composition is plaster of Paris-based, it is also referred to herein as the dry plaster composition. When the dry sprayable fireproof coating composition is hydraulic cement-based, it is also referred to herein as the dry cement composition.

Preferably, the dry plaster composition of this invention comprises from 15 parts to 35 parts plaster of Paris, from 15 parts to 35 parts mineral wool, from 40 parts to 70 parts vermiculite, and from 0.05 parts to 1 part of at least one hydroxypropylhydroxyethylcellulose, the total of which is 100 parts. Most preferably the dry plaster mixture contains from 20 parts to 30 parts plaster of Paris, from 20 parts to 30 parts mineral wool, from 45 parts to 55 parts vermiculite, and from 0.1 part to 0.2 parts of at least one hydroxypropylhydroxyethylcellulose, the total of which is 100 parts.

Preferably, the dry cement composition of this invention, on the other hand, comprises from 40 parts to 60 parts of a hydraulic cement, from 10 parts to 30 parts mineral wool, from 20 parts to 50 parts vermiculite and from 0.05 parts to 1 part of at least one hydroxypropylhydroxyethylcellulose, the total of which is 100 parts. Most preferably, the dry cement mixture comprises from 45 parts to 55 parts of a hydraulic cement, from 15 parts to 25 parts mineral wool, from 25 parts to 35 parts vermiculite and from 0.1 part to 0.2 parts of at least one hydroxypropylhydroxyethylcellulose, the total of which is 100 parts.

Preferably the hydroxypropylhydroxyethylcellulose has a hydroxypropyl M.S. at least 0.6; most preferably, it has a hydroxyethyl M.S. from 0.7 to 1.5, and a hydroxypropyl M.S. from 0.6 to 1.2. The total M.S. of these two substituent groups should be sufficient to give a hydroxypropylhydroxyethylcellulose having a high Brookfield viscosity, i.e., at least 100 centipoise (cps) at 1% aqueous solution at 23°C, preferably from 2000 to 4000 cps. Generally, the total M.S. of these two substituent groups is from 1.0 to 5.0.

The designation M.S. refers to the average number of moles of hydroxyethyl or hydroxypropyl substituent groups combined per cellulosic anhydroglucose unit.

When compared, for example, with the sprayable fireproof coatings prepared with the most commonly used thickener in these coatings, namely methylhydroxypropylcellulose, the sprayable fireproof coatings of this invention show improved sprayability, sag resistance, water uptake and water retention, which are the important parameters used widely in the art to characterize sprayable fireproof coatings. The fireproof coatings of this invention also show improved air entrainment when the fireproof coatings are based on plaster of Paris.

The hydroxypropylhydroxyethylcellulose which can be used as a thickener, water retention aid in the sprayable fireproof coatings of this invention is prepared by reacting ethylene oxide and propylene oxide with cellulose in a strongly alkaline medium. Specific techniques for carrying out the etherification are well known in the art and any known procedure can be employed.

In the alternative, a hydroxyethylcellulose can be etherified with a propylene oxide in a strongly alkaline medium. In this case, the hydroxyethylcellulose can be substantially any grade having M.S. from 0.3 to 4.0. The preferred materials are those having a Brookfield viscosity from 100 to 5000 cps (0.1 to 5 Pas) in a 1% water solution at 23°C. Materials of higher and lower viscosity can also be used advantageously, however.

Regardless of the method used to prepare the hydroxypropylhydroxyethylcellulose of this invention, the product is neutralized with an acid, preferably nitric acid or mixture of acids, such as nitric and acetic acid, and then washed with an aqueous solution of acetone containing about 90% acetone to remove the reaction by-products, such as alkali metal salts, ethylene glycol, and propylene glycol, such that the purified product has an ash content of about 5% or less. Preferably, the product has an ash content of from about 2.9 to 4.9.

Any cellulose furnish can be used to prepare the hydroxyethylcellulose, for example, wood pulp, cotton linters of varying viscosities, and the like.

An air-entraining agent, such as sodium lauryl sulfate or sodium stearate, in an amount from 0.001 parts to 1.0 part by weight of the dry composition may also be added, with the amount of the other ingredients of the dry composition being adjusted so that the total amount is 100 parts.

Heat diffusing constituents, such as perlite, may also be present in an amount from 25 parts to 60 parts by weight of the dry composition, with the amount of the other ingredients of the dry composition being adjusted so that the total amount is 100 parts.

A sprayable fireproof coating can be prepared by adding water to a dry composition containing (1) either plaster of Paris or a hydraulic cement, (2) mineral wool, (3) vermiculite, and (4) the thickener of the instant invention. The proportion of thickener in the dry plaster or cement is typically range from 0.05 parts to 1 part, preferably from 0.1 part to 0.5 parts, by weight of the dry composition. The plaster or cement functions as a hydraulic adhesive for the coating composition.

These dry plaster compositions or hydraulic cement compositions, when added to water, forms a plaster or cement which is sprayable onto a structural substrate surface in layers on the order of ¼ inch to 2 inches (6.35 to 50.8 mm), typically ½ inch to 1 inch (12.7 to 25.4 mm). The amount of water used is such that the resultant plaster or cement composition is sprayable, yet will not be so thin as to slide down or drop off the surface of the substrate when applied. In general, from 190 parts to 210 parts water, by weight based on the weight of the dry composition, gives good results.

## Example 1

This example illustrates a preferred specific embodiment of the sprayable fireproof coating compositions of this invention, and how to prepare it.

A tumble blender is charged with 99.65 parts of a mixture having (a) 25% plaster of Paris, (b) 25% mineral wool and (c) 50% vermiculite; and 0.35 parts of a hydroxypropylhydroxyethylcellulose having a hydroxypropyl M.S. of 1.0 and a hydroxyethyl M.S. of 1.2 and tumble blended at room temperature (about 23°C) to a substantially homogeneous state. The dry mix is added to the water in a ratio of 1:2 (dry mix:water) in specialized mixing equipment at the job site, and the wet mix is immediately pumped and sprayed by the machine through a spray nozzle onto the structural surface.

## Example 2

This example illustrates another specific embodiment of the sprayable fireproof coating compositions of this invention.

The sprayable fireproof coating is prepared according to the procedure and formulation of Example 1, except that a hydroxypropylhydroxyethylcellulose having a hydroxypropyl M.S. of 0.9 and a hydroxyethyl M.S. of 0.9 is used instead of a hydroxypropylhydroxyethylcellulose having a hydroxypropyl M.S. of 1.0 and a hydroxyethyl M.S. of 1.2.

## Example 3

This example illustrates another specific embodiment of the sprayable fireproof coating compositions of this invention.

The sprayable fireproof coating is prepared according to the procedure and formulation of Example 1, except that a hydroxypropylhydroxyethylcellulose having a hydroxypropyl M.S. of 0.98 and a hydroxyethyl M.S. of 1.23 is used instead of a hydroxypropylhydroxyethylcellulose having a hydroxypropyl M.S. of 1.0 and a hydroxyethyl M.S. of 1.2.

Example 4

This example illustrates another specific embodiment of the sprayable fireproof coating compositions of this invention.

The sprayable fireproof coating is prepared according to the procedure of Example 1 using 99.65 parts of a mixture having (a) 50% of a Portland cement white Type I, (b) 20% mineral wool and (c) 30% vermiculite; and 0.35 parts of a hydroxypropylhydroxyethylcellulose having a hydroxypropyl M.S. of 1.0 and a hydroxyethyl M.S. of 1.2.

Example 5

This example illustrates another specific embodiment of the sprayable fireproof coating compositions of this invention.

The sprayable fireproof coating is prepared according to the procedure and formulation of Example 1, except that 99.5 parts of the mixture is used instead of 99.65 parts and except that 0.5 parts of the hydroxypropylhydroxyethylcellulose is used instead of 0.35 parts.

The properties of the hydroxypropylhydroxyethylcelluloses in sprayable fireproof coatings were evaluated by the following test methods.

Water loss (or water retention) is a measure of the amount of bleeding or water loss that the composition experiences when in contact with an absorptive surface. A low water loss value is desirable since excessive water loss can cause low strength, poor adhesion, and cracking of the dried fireproof coating composition. The amount of water loss is measured by stapling 10 circles of 9.0 cm no. 40 Whatman filter paper together and weighing them. The filter paper stack is then placed on a flat surface and covered with one 11.0 cm no. 4 Whatman filter paper. A 2″ (5.1 cm) diameter by 3″ (7.6 cm) long cylinder is placed on top of this filter paper stack. The cylinder is filled to the top with wet plaster or cement mix. After exactly 1 minute, the cylinder and the one no. 4 filter paper are removed. The filter paper stack is weighed to determine the water gain, which is expressed as water loss in grams (gms) from the plaster or cement-based fireproof coating composition.

The amount of air entrained in the composition is determined graviometrically. The wet fireproof coating mix is placed in a cylinder of known volume and tapped 100 times to remove any large air bubbles. The mix at the top of the cylinder is sawed off to give a known volume of mix. The weight of the mix is measured. Taking the specific gravity of the wet mix and the known specific gravity of the solids in the mix, the air volume of the wet mix is calculated. High air content in the fireproof coating composition is desirable since this leads to a coating mixture which is easier to pump.

Sag resistance and spray characteristics are subjectively determined.

The properties of the sprayable fireproof coatings prepared with the hydroxypropylhydroxyethylcelluloses of Examples 1 to 4 as compared to three control sprayable fireproof coatings using prior art thickeners are shown in Table I below. Control A is prepared according to the formulation and procedure of Example 1, except that 0.35 parts of a methylhydroxypropylcellulose having a methyl D.S. of about 0.15 and a hydroxyethyl M.S. of about 1.8. Control B is prepared according to the procedure of Example 1, using the formulation of Example 4 except that 0.35 parts of a methylhydroxypropylcellulose having a methyl D.S. of about 0.15 and a hydroxyethyl M.S. of about 1.8. Control C is prepared according to the procedure and formulation of Example 1, except that 99.5 parts of the mixture is used instead of 99.65 parts and except that 0.5 parts of a methylhydroxypropylcellulose having a methyl D.S. of about 0.15 and a hydroxyethyl M.S. of about 1.8.

Degree of substitution is the average number of methyl groups per cellulosic anhydroglucose unit.

TABLE I

Properties of Sprayable Fireproof Coatings Prepared with Hydroxypropylhydroxyethylcellulose (HPHEC)

| Example No. | Water Loss (gms.) | Air En-trainment % by Volume | Sag Resistance | Spray Characteristics |
|---|---|---|---|---|
| Control A | 0.47 | 48.7 | very poor | slightly runny, severe spatter |
| 1 | 0.26 | 41.1 | good | sprays well, no spatter |
| 2 | 0.46 | 52.7 | good | sprays well, no spatter |
| 3 | 0.38 | 53.6 | good | sprays well, no spatter |
| Control B | 2.19 | 24.0 | fair | runny, severe spatter |
| 4 | 1.60 | 18.0 | excellent | sprays well, little spatter |
| Control C | 0.40 | 37.0 | very poor | slightly runny, moderate spatter |
| 5 | 0.26 | 33.7 | excellent | sprays well, no spatter |

## Claims

1. A dry sprayable fireproof coating composition containing a plaster of Paris or a hydraulic cement; mineral wool; vermiculite, and from 0.05 part to 1.0 part of a water-retaining cellulose thickener, said dry composition being capable, when mixed with from 190 parts to 210 parts of its own weight of water, of producing a fireproof coating composition which can be sprayed in thin layers on the surfaces of structural substrates, characterised by using as the water-retaining thickener at least one hydroxypropylhydroxyethylcellulose having hydroxyethyl M.S. from 0.3 to 4.0 and hydroxypropyl M.S. greater than 0.35.

2. The composition of claim 1 wherein the hydroxypropylhydroxyethylcellulose has a hydroxypropyl M.S. of at least 0.6.

3. The composition of claim 2 wherein the hydroxypropylhydroxyethylcellulose has a hydroxyethyl M.S. from 0.7 to 1.8 and a hydroxypropyl M.S. from 0.6 to 1.2.

4. The composition of any of claims 1—3 wherin the hydroxypropylhydroxyethylcellulose is present in an amount from 0.1 part to 0.5 part.

5. The composition of any of claims 1—4 having an ash content of 5% or less.

6. The composition of claim 5 having an ash content of 2.9 to 4.9%.

7. The composition of any of claims 1—6 further containing perlite.

8. A process for forming a fireproof coating on a structure substrate, which comprises spraying on to the surface a plaster or cement formed by mixing the composition of any of claims 1—7 with 190 to 210 parts of its own weight of water, to produce a layer of a thickness of 6.35 to 50.8 mm.

## Patentansprüche

1. Trockene Masse für spritzbare feuerfeste Beschichtungen, enthaltend einen Putzgips oder einen hydraulischen Zement; Mineralwolle; Vermiculit; sowie zwischen 0,05 und 1,0 Teilen eines wasserrückhaltenden Zelluloseverdickungsmittels, wobei diese trockene Verbindung, wenn mit 190 bis 210 Teilen ihres Eigengewichts Wasser gemischt, eine feuerfeste Beschichtungsmasse ergeben kann, die in dünnen Schichten auf die Oberflächen der zu spritzenden Bauelemente gesprüht werden kann, dadurch gekennzeichnet, daß als wasserrückhaltendes Verdickungsmittel mindestens eine Hydroxypropyl-Hydroxyäthyl-Zellulose mit einem Hydroxyäthyl-M.S.-Wert von 0,3 bis 4,0 und einem Hydroxypropyl-M.S.-Wert von über 0,35 verwendet wird.

2. Verbindung nach Anspruch 1, dadurch gekennzeichnet, daß die Hydroxypropyl-Hydroxyäthyl-Zellulose einen Hydroxypropyl-M.S.-Wert von mindestens 0,6 besitzt.

3. Verbindung nach Anspruch 2, dadurch gekennzeichnet, daß die Hydroxypropyl-Hydroxyäthyl-Zellulose einen Hydroxyäthyl-M.S.-Wert von 0,7 bis 1,8 und einen Hydroxypropyl-M.S.-Wert zwischen 0,6 und 1,2 besitzt.

4. Verbindung nach einem der Ansprüche 1 bis 3, dadurch gekennzeichnet, daß die Hydroxypropyl-Hydroxyäthyl-Zellulose in einer Menge von 0,1 bis 0,5 Teilen vorhanden ist.

5. Verbindung nach einem der Ansprüche 1 bis 4 mit einem Aschengehalt von 5% oder darunter.

6. Verbindung nach Anspruch 5 mit einem Aschengehalt zwischen 2,9 und 4,9%.

7. Verbindung nach einem der Ansprüche 1 bis 6, zusätzlich Perlit enthaltend.

8. Verfahren zum Formen einer feuerfesten Beschichtung auf einem zu beschichtenden Bauteil, welches das Spritzen eines durch Mischen der Verbindung nach einem der Ansprüche 1 bis 7 mit 190 bis 210 Teilen des Eigengewichts Wasser gebildeten Gipses oder Zements zur Herstellung einer 6,35 bis 50,8 mm starken Schicht auf die Oberfläche umfaßt.

## Revendications

1. Composition sèche de revêtement ignifuge par projection, contenant un plâtre de Paris ou un ciment hydraulique, de la laine minérale, de la vermiculite et de 0,05 partie à 1,0 partie d'un épaississant cellulosique retenant l'eau, cette composition sèche étant capable, lorsqu'elle est mélangée avec 190 à 210 parties de son propre poids d'eau, de donner une composition de revêtement ignifuge qui peut être projetée en couches minces sur les surfaces de substrats de construction, caractérisée par l'utilisation, en tant qu'épaississant retenant l'eau, d'au moins une hydroxypropylhydroxyéthylcellulose ayant une M.S. (substitution molaire) d'hydroxyéthyle de 0,3 à 4,0 et une M.S. d'hydroxypropyle supérieure à 0,35.

2. Composition selon la revendication 1, dans laquelle l'hydroxypropylhydroxyéthylcellulose a une M.S. d'hydroxypropyle d'au moins 0,6.

3. Composition selon la revendication 2, dans laquelle l'hydroxypropylhydroxyéthylcellulose a une M.S. d'hydroxyéthyle de 0,7 à 1,8 et une M.S. d'hydroxypropyle de 0,6 à 1,2.

4. Composition selon l'une quelconque des revendications 1 à 3, dans laquelle l'hydroxypropylhydroxyéthylcellulose est présente dans une proportion de 0,1 partie à 0,5 partie.

5. Composition selon l'une quelconque des revendications 1 à 4, ayant une teneur en cendres de 5% ou moins.

6. Composition selon la revendication 5, ayant une teneur en cendres de 2,9 à 4,9%.

7. Composition selon l'une quelconque des revendications 1 à 6, contenant en outre de la perlite.

8. Procédé pour la formation d'un revêtement ignifuge sur un substrate de construction, consistant à projeter sur la surface un plâtre ou ciment préparé en mélangeant la composition selon l'une quelconque des revendications 1 à 7 avec 190 à 210 parties de son propre poids d'eau, pour former une couche d'une épaisseur de 6,35 à 50,8 mm.